# EUROPEAN PATENT APPLICATION

(11) **EP 4 485 747 A1**
(43) Date of publication of application: **01.01.2025**
(21) Application number: 24182773.2
(22) Date of filing: 18.06.2024
(51) Int. Cl.: H02J 7/00, H02J 9/00

(54) **ADAPTIVE BATTERY ALGORITHM FOR EFFECTIVE BATTERY MANAGEMENT SYSTEM**

(30) Priority: 30.06.2023 US 202318216719
(71) Applicant: Schneider Electric IT Corporation, Foxboro, MA 02035 (US)
(72) Inventor: KANDULA, Sanjay Krishna, FOXBORO, 02035 (US); ELLENDULA, Shiva Prasad, FOXBORO, 02035 (US); KUKUNURI, NVS Sivamani Sudhakar, FOXBORO, 02035 (US); GOVINDA, Girish Kumar, FOXBORO, 02035 (US); CHANG, ShaoKang, FOXBORO, 02035 (US)
(74) Representative: Plasseraud IP

(57) **Abstract**

Examples of the disclosure include a system comprising a first input configured to be coupled to a primary power source, a second input configured to be coupled to at least one energy-storage device, an output configured to be coupled to at least one load, energy-storage-device-charging circuitry, and at least one controller configured to determine one or more battery-mode parameters associated with power provided by the at least one energy-storage device, select a minimum state-of-charge (SOC) and a maximum SOC based on the one or more battery-mode parameters, and control the energy-storage-device-charging circuitry to begin charging the at least one energy-storage device responsive to determining that a current SOC of the at least one energy-storage device is at or below the minimum SOC, and cease charging the at least one energy-storage device responsive to determining that the current SOC is at or above the maximum SOC.

## Description

### BACKGROUND

### Field of the Disclosure

At least one example in accordance with the present disclosure relates generally to power devices.

### Discussion of Related Art

Power devices, such as uninterruptible power supplies (UPSs), may be used to provide regulated, uninterrupted power for sensitive and/or critical loads, such as computer systems and other data-processing systems. Existing UPSs include online UPSs, offline UPSs, fine-interactive UPSs, as well as others. UPSs may provide output power to a load. The output power may be derived from a primary source of power, such as a utility-mains source, and/or derived from a back-up source of power, such as an energy-storage device.

### BRIEF DESCRIPTION OF THE DRAWINGS

Various aspects of at least one embodiment are discussed below with reference to the accompanying figures, which are not intended to be drawn to scale. The figures are included to provide an illustration and a further understanding of the various aspects and embodiments, and are incorporated in and constitute a part of this specification, but are not intended as a definition of the limits of any particular embodiment. The drawings, together with the remainder of the specification, serve to explain principles and operations of the described and claimed aspects and embodiments. In the figures, each identical or nearly identical component that is illustrated in various figures is represented by a like numeral. For purposes of clarity, not every component may be labeled in every figure. In the figures:
FIG. 1 illustrates a block diagram of a power system according to an example;
FIG. 2 illustrates a block diagram of an uninterruptible power supply (UPS) according to an example;
FIG. 3 illustrates a process of determining a minimum- and maximum-state-of-charge (SOC) limit for the UPS according to an example; and
FIG. 4 illustrates a process of providing recharging power with the UPS pursuant to the minimum- and maximum-SOC limit according to an example.

### DETAILED DESCRIPTION

Examples of the methods and systems discussed herein are not limited in application to the details of construction and the arrangement of components set forth in the following description or illustrated in the accompanying drawings. The methods and systems are capable of implementation in other embodiments and of being practiced or of being carried out in various ways. Examples of specific implementations are provided herein for illustrative purposes only and are not intended to be limiting. In particular, acts, components, elements and features discussed in connection with any one or more examples are not intended to be excluded from a similar role in any other examples.

Also, the phraseology and terminology used herein is for the purpose of description and should not be regarded as limiting. Any references to examples, embodiments, components, elements or acts of the systems and methods herein referred to in the singular may also embrace embodiments including a plurality, and any references in plural to any embodiment, component, element or act herein may also embrace embodiments including only a singularity. References in the singular or plural form are not intended to limit the presently disclosed systems or methods, their components, acts, or elements. The use herein of "including," "comprising," "having," "containing," "involving," and variations thereof is meant to encompass the items listed thereafter and equivalents thereof as well as additional items.

References to "or" may be construed as inclusive so that any terms described using "or" may indicate any of a single, more than one, and all of the described terms. In addition, in the event of inconsistent usages of terms between this document and documents incorporated herein by reference, the term usage in the incorporated features is supplementary to that of this document; for irreconcilable differences, the term usage in this document controls.

As discussed above, uninterruptible power supplies (UPSs) provide uninterrupted power to one or more loads. UPSs may receive input power from any of various power sources, such as a primary power source (for example, a utility mains) or a secondary, or backup, power source (for example, an energy-storage device such as a battery). In some examples, a UPS may draw input power from the primary power source if power is available from the primary power source. If acceptable power is not available from the primary power source (for example, because of a blackout condition), the UPS may draw power from the secondary power source.

Acceptable power may regularly be unavailable from the primary power source for short periods of time throughout operation of the UPS. For example, some utility grids may regularly experience blackout conditions, brownout conditions, sag conditions, and/or swell conditions which last for only a few seconds. In these examples, the energy-storage device may only be discharging power for short periods of time, which may account for a fraction of the overall runtime capacity of the energy-storage device.

For example, it may not be unusual for an energy-storage device coupled to a UPS to discharge to the UPS for at most two minutes at a time. However, the energy-storage device may have a runtime that is much longer, such as 10 minutes. Thus, only up to about 20% of the energy storage device's stored energy may be consumed during any given discharge event. If the energy-storage device is normally recharged to a maximum charge (that is, 100% state-of-charge [SOC]) between uses, the energy-storage device may discharge from 100% SOC to 80% SOC and subsequently be recharged to 100% in this example.

A lifetime of a battery may be a total time that the battery remains in operation between initially being implemented by an end user and when the battery is at an end-of-life and should be replaced. The lifetime of a battery may depend on many factors, including the conditions under which the battery is charged and discharged. That is, a battery discharging for a given amount of time (for example, two minutes) may take more or less off of the lifetime of the battery depending on the conditions under which the battery is discharged.

One example parameter that affects battery lifetime is the SOC at which the battery operates. For example, discharging and recharging between 100% and 80% SOC may impact the lifetime of the battery more than discharging and recharging between 60% and 40% SOC. Even though the battery may discharge the same amount of energy over the same amount of time, the lifetime of the battery may be reduced more when discharging and recharging between 100% and 80% than 60% and 40%.

For various types of energy-storage devices, the lifetime of the device may vary based on an average SOC of the device. For example, the lifetime of a battery may be increased by maintaining the average SOC of the battery around certain SOCs, such as 50% SOC. Maintaining the average SOC of the battery around 50% SOC may increase the lifetime of the battery as compared to higher average SOCs (for example, 100%, 95%, 90%, and so forth) and lower average SOCs (for example, 10%, 20%, 25%, and so forth). The lifetime of the device may also depend on how often the device is recharged. For example, the lifetime of the device may be depleted more quickly if the device is recharged more often.

Examples of the disclosure provide power devices, such as UPSs, with minimum-SOC limits and maximum-SOC limits. In some examples, a power device (or a device coupled thereto, such as a cloud server) determines one or more battery-mode parameters over one or more discharge cycles. Battery-mode parameters include parameters such as an average amount of power discharged, a highest amount of power discharged, and so forth. Based on the one or more battery-mode parameters, the power device may determine a minimum- and maximum-SOC limit with an average of approximately 50% SOC. In some examples, a difference between the minimum- and maximum-SOC limit may be based on (for example, approximately equal to) a highest amount of charge consumed in one discharge cycle. For example, if the highest amount of power discharged is 20% of the battery's full charge, then the minimum-SOC limit may be 40% and the maximum-SOC limit may be 60%. Thus, rather than charging the battery to 100% SOC, the power device may charge the battery only to 60%. Moreover, the battery may not be recharged until the SOC of the battery falls below the minimum-SOC limit of 40%. The lifetime of the battery may thereby be extended.

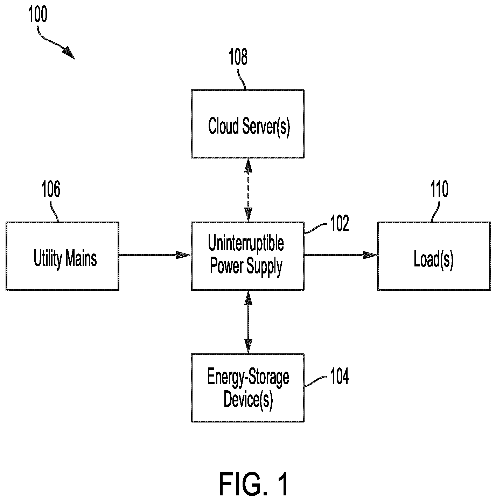

FIG. 1 illustrates a block diagram of a power system 100 according to an example. The power system 100 includes an uninterruptible power supply (UPS) 102, one or more energy-storage devices ("energy-storage device 104"), a utility-mains supply 106 ("mains 106"), one or more cloud servers 108 ("cloud server 108"), and one or more loads 110 ("load 110"). Although the energy-storage device 104 is illustrated as being external to the UPS 102, in some examples, the energy-storage device 104 may be a component of, and internal to, the UPS 102 as discussed below.

The UPS 102 may include one or more input connections coupled to the mains 106 and the energy-storage device 104. As discussed below, even if the energy-storage device 104 is internal to the UPS 102, the UPS 102 may be considered to have an input connection coupled to the energy-storage device 104. The UPS 102 may include an output connection coupled to the load 110. The UPS 102 may be communicatively coupled to various devices, such as the cloud server 108.

As discussed in greater detail below, the UPS 102 is configured to provide uninterruptible power to the load 110. If acceptable power is available from the mains 106, then the UPS 102 may draw input power from the mains 106 to provide output power to the load 110. The UPS 102 may also provide recharging power derived from the input power to the energy-storage device 104.

Acceptable power may not always be available from the mains 106. For example, the mains 106 may experience a blackout condition, voltage sags, voltage swells, and so forth, which render the input power unacceptable. The UPS 102 may stop drawing input power from the mains 106 if the mains input power is unacceptable. The UPS 102 may transition from the online mode of operation, during which power is drawn from the mains 106, to a battery mode (or "backup mode") of operation.

During the battery mode of operation, the UPS 102 may draw power from the energy-storage device 104. Thus, the energy-storage device 104 ensures that power is available to the UPS 102 even when the mains 106 is not providing acceptable power. In some examples, power may be drawn from the energy-storage device 104 primarily or exclusively during this battery mode of operation. The battery mode of operation may last for only a fraction of the maximum available runtime of the energy-storage device 104. For example, the battery mode of operation may last for only up to approximately two minutes, yet the energy-storage device 104 may have a runtime of approximately 10 minutes when fully charged.

As discussed above, it may be advantageous to limit a maximum SOC of the energy-storage device 104 in view of the fact that the necessary runtime of the energy-storage device 104 may be substantially lower than the maximum available runtime of the energy-storage device 104 (for example, when the energy-storage device 104 discharges from a full charge). Furthermore, it may be advantageous to impose a minimum SOC, or charging threshold, above which the energy-storage device 104 may not be recharged.

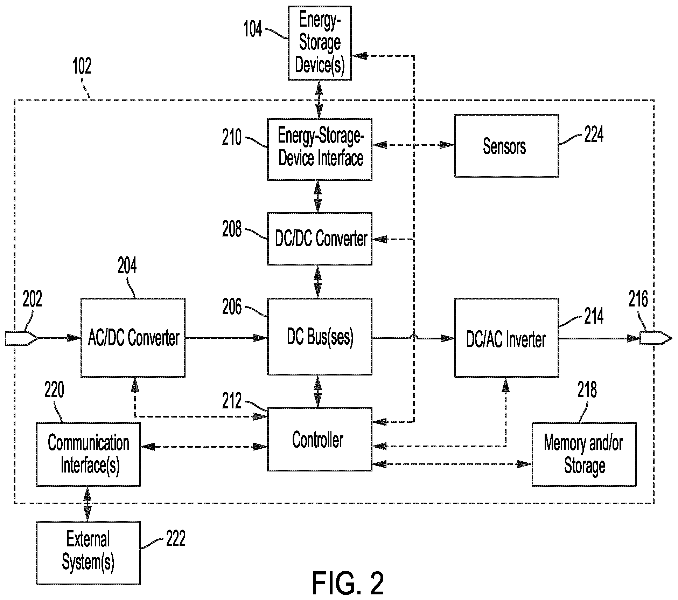

FIG. 2 is a block diagram of the UPS 102 according to an example. The UPS 102 includes an input 202, an AC/DC converter 204, one or more DC busses 206, a DC/DC converter 208, an energy-storage-device interface 210, at least one controller 212 ("controller 212"), a DC/AC inverter 214, an output 216, a memory and/or storage 218, one or more communication interfaces 220 ("communication interfaces 220"), which may be communicatively coupled to one or more external systems 222 ("external systems 222"), and one or more voltage sensors and/or current sensors 224 ("sensors 224").

The input 202 is coupled to the AC/DC converter 204 and to an AC power source (not pictured), such as the mains 106. The AC/DC converter 204 is coupled to the input 202 and to the one or more DC busses 206 and is communicatively coupled to the controller 212. The one or more DC busses 206 are coupled to the AC/DC converter 204, the DC/DC converter 208, and to the DC/AC inverter 214, and are communicatively coupled to the controller 212. The DC/DC converter 208 is coupled to the one or more DC busses 206 and to the energy-storage-device interface 210 and is communicatively coupled to the controller 212.

The energy-storage-device interface 210 is coupled to the DC/DC converter 208, and is configured to be coupled to energy-storage device 104 and/or another energy-storage device. In some examples, the energy-storage-device interface 210 is configured to be communicatively coupled to the controller 212. In some examples, the UPS 102 may be external to the energy-storage device 104 and may be coupled to the energy-storage device 104 via the energy-storage-device interface 210. In various examples, the UPS 102 may include one or more energy-storage devices, which may include the energy-storage device 104. Thus, the energy-storage device 104 may be either internal to or external to the UPS 102, and may be a component of, or separate from, the UPS 102 in various examples. The energy-storage-device interface 210 may provide an input connection to couple to the energy-storage device 104 whether the energy-storage device 104 is internal to and a component of, or external to and coupled to, the UPS 102. The energy-storage device 104 may include one or more batteries, capacitors, flywheels, or other energy-storage devices in various examples.

The DC/AC inverter 214 is coupled to the one or more DC busses 206 and to the output 216 and is communicatively coupled to the controller 212. The output 216 is coupled to the DC/AC inverter 214, and to an external load (not pictured). The controller 212 is communicatively coupled to the AC/DC converter 204, the one or more DC busses 206, the DC/DC converter 208, the energy-storage-device interface 210, the DC/AC inverter 214, the memory and/or storage 218, the communication interfaces 220, and/or the energy-storage device 104. The sensors 224 are communicatively coupled to the controller 212 and may be coupled to one or more other components of the UPS 102, such as the input 202, the AC/DC converter 204, the one or more DC busses 206, the DC/DC converter 208, the energy-storage-device interface 210, the DC/AC inverter 214, and/or the output 216.

The input 202 is configured to be coupled to an AC mains power source and to receive input AC power having an input voltage level. The UPS 102 is configured to operate in different modes of operation based on the input voltage of the AC power provided to the input 202. The controller 212 may determine a mode of operation in which to operate the UPS 102 based on whether the input voltage of the AC power is acceptable. The controller 212 may include or be coupled to one or more sensors, such as the sensors 224, configured to sense parameters of the input voltage. For example, the sensors 224 may include one or more voltage and/or current sensors coupled to the input 202 and being configured to sense information indicative of a voltage at the input 202 and provide the sensed information to the controller 212.

When AC power provided to the input 202 is acceptable (for example, by having parameters, such as an input voltage value, that meet specified values, such as by falling within a range of acceptable input voltage values), the controller 212 controls components of the UPS 102 to operate in a normal mode of operation. In the normal mode of operation, AC power received at the input 202 is provided to the AC/DC converter 204. The AC/DC converter 204 converts the AC power into DC power and provides the DC power to the one or more DC busses 206. The one or more DC busses 206 distribute the DC power to the DC/DC converter 208 and to the DC/AC inverter 214. In some examples, the DC/DC converter 208 may convert the received DC power and provide the converted DC power to the energy-storage-device interface 210. For example, the controller 212 may control the DC/DC converter 208 to do so if a current SOC of the energy-storage device 104 is below a minimum-SOC limit. The energy-storage-device interface 210 receives the converted DC power and provides the converted DC power to the energy-storage device 104 to charge the energy-storage device 104. The DC/AC inverter 214 receives DC power from the one or more DC busses 206, converts the DC power into regulated AC power, and provides the regulated AC power to the output 216 to be delivered to a load.

When AC power provided to the input 202 from the AC mains power source is not acceptable (for example, by having parameters, such as an input voltage value, that do not meet specified values, such as by falling outside of a range of acceptable input voltage values), the controller 212 controls components of the UPS 102 to operate in a backup mode of operation. In the backup mode of operation, DC power is discharged from the energy-storage device 104 to the energy-storage-device interface 210, and the energy-storage-device interface 210 provides the discharged DC power to the DC/DC converter 208. The DC/DC converter 208 converts the received DC power and distributes the DC power amongst the one or more DC busses 206. The one or more DC busses 206 provide the received power to the DC/AC inverter 214. The DC/AC inverter 214 receives the DC power from the one or more DC busses 206, converts the DC power into regulated AC power, and provides the regulated AC power to the output 216.

In some examples, the sensors 224 may include one or more sensors coupled to one or more of the foregoing components such that a voltage and/or current of one or more of the foregoing components may be determined by the controller 212. The controller 212 may store information in, and/or retrieve information from, the memory and/or storage 218. For example, the controller 212 may store information indicative of sensed parameters (for example, input-voltage values of the AC power received at the input 202) in the memory and/or storage 218. The controller 212 may also store minimum- and/or maximum-SOC limits in the memory and/or storage 218.

The controller 212 may further receive information from, or provide information to, the communication interfaces 220. The communication interfaces 220 may include one or more communication interfaces including, for example, user interfaces (such as display screens, touch-sensitive screens, keyboards, mice, track pads, dials, buttons, switches, sliders, light-emitting components such as light-emitting diodes, sound-emitting components such as speakers, buzzers, and so forth configured to output sound inside and/or outside of a frequency range audible to humans, and so forth), wired communication interfaces (such as wired ports), wireless communication interfaces (such as antennas), and so forth, configured to exchange information with one or more systems, such as the external systems 222, or other entities, such as human beings. The external systems 222 may include any device, component, module, and so forth, that is external to the UPS 102, such as the cloud server 108, another server or servers, a database, a laptop computer, a desktop computer, a tablet computer, a smartphone, a central controller or data-aggregation system, other UPSs, and so forth.

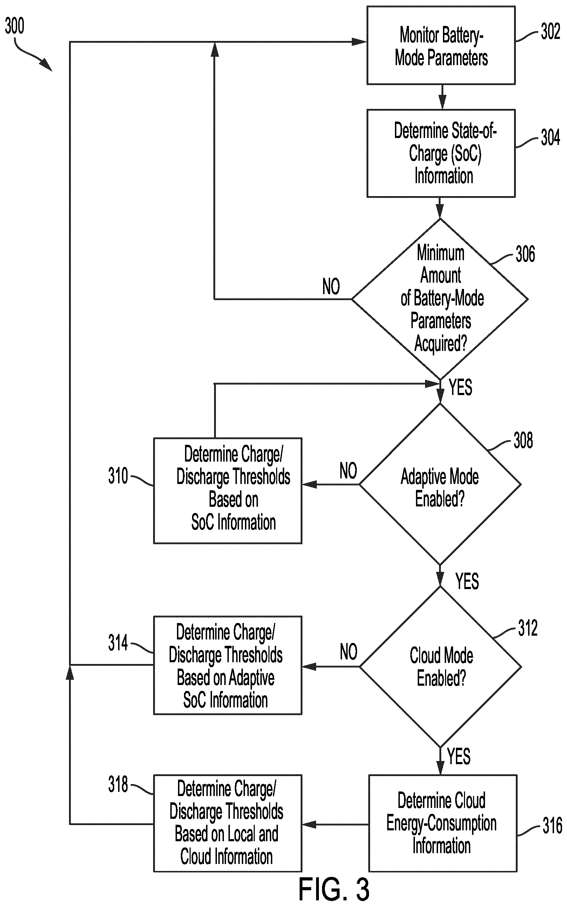

FIG. 3 illustrates a process 300 of determining minimum- and maximum-SOC limits according to an example. In some examples, the controller 212 may execute the process 300. The controller 212 may determine minimum- and maximum-SOC limits based on any of various different groups of information depending on whether the UPS 102 is in an adaptive mode and/or cloud mode. As discussed below, the controller 212 may determine the minimum- and maximum-SOC limits based on information acquired during a rolling window of time. If the UPS 102 is in the adaptive mode, then the UPS 102 may automatically set the minimum- and maximum-SOC limits based on the information acquired during the rolling window of time. If the UPS 102 is in the cloud mode, then the controller 212 may also determine and automatically set the minimum- and maximum-SOC limits based on information received from the cloud server. If the UPS 102 is not in the adaptive mode nor the cloud mode (and may therefore be referred to as being in the "manual mode"), then the UPS 102 may provide suggested minimum- and maximum-SOC limits to a user, but may not set the minimum- and maximum-SOC limits without user approval.

At act 302, the cloud server 108 monitors one or more battery-mode parameters. The one or more battery-mode parameters may be parameters associated with the battery mode of operation. For example, the battery-mode parameters may include an amount of power or charge discharged by the energy-storage device 104 during the battery mode of operation, a discharge current or voltage of the energy-storage device 104 during the battery mode of operation, a runtime of the energy-storage device 104 during the battery mode of operation, a maximum and/or average charge consumption for each battery mode of operation throughout a day, and so forth.

The one or more battery-mode parameters may include parameters acquired during modes of operation other than the battery mode of operation which might nonetheless indicate aspects of, or be associated with, the battery mode of operation. For example, the battery-mode parameters may include a load profile of the load 110, an amount of power drawn by the load 110 in any mode of operation, an amount of voltage across the load 110 in any mode of operation, an amount of current drawn by the load 110 in any mode of operation, and so forth. Parameters indicative of the amount of power drawn by the load 110 in modes of operation such as the online mode of operation may be indicative of how much power will be drawn in the battery mode of operation. In various examples, the one or more battery parameters may include or be used to determine an amount of charge discharged by the energy-storage device 104 each time the energy-storage device 104 is in the battery mode of operation. As discussed below with respect to the cloud mode of operation, the controller 212 may also send information indicative of the one or more battery-mode parameters to the cloud server 108 at act 302.

At act 304, the controller 212 determines SOC information based on the battery-mode parameters determined at act 302. For example, the controller 212 may determine a rolling average of a maximum amount of charge or energy consumed during the battery mode of operation on each day within the rolling window. Based on the average energy calculated, the controller 212 may determine an SOC that corresponds to this average amount of energy consumed using, for example, a look-up table stored in the memory and/or storage 218. A rolling average, and the corresponding SOC, may be recalculated periodically (for example, every day) as the rolling window (for example, three months) moves. As discussed below with respect to the cloud mode of operation, the controller 212 may also send information indicative of the SOC information to the cloud server 108 at act 304.

To provide an illustrative example, suppose that a rolling average is taken over two days. On a first day, the UPS 102 enters the battery mode of operation three times and consumes 1 Ah, 2.5 Ah, and 5 Ah of charge, respectively, in the three battery modes of operation. Accordingly, the maximum amount of charge consumed is determined to be 5 Ah on the first day. On a second day, the UPS 102 enters the battery mode of operation two times and consumes 3 Ah and 6 Ah, respectively, in the two battery modes of operation. Accordingly, the maximum amount of charge consumed is determined to be 6 Ah on the second day.

The controller 212 may therefore determine, for this rolling average of two days, that the average maximum charge consumption is 5.5 Ah (that is, an average of 5 Ah and 6 Ah). The controller 212 may determine an SOC consumption that corresponds to 5.5 Ah of charge. For example, the controller 212 may determine that the 5.5 Ah of charge consumption corresponds to 20% SOC. The controller 212 may subsequently access a lookup table to determine a minimum- and maximum-SOC threshold based on the 20% SOC. On a following third day, the controller 212 may recalculate the average charge consumption based on the second day and the third day, but not the first day, because the rolling window has moved past the first day.

At act 306, the controller 212 determines whether a minimum amount of battery-mode parameters have been acquired. The minimum amount may correspond to the length of the rolling window. For example, if the rolling window is three months, act 306 may include the controller 212 determining whether battery-mode parameters have been acquired over a period of at least three months. If the controller 212 determines that the minimum amount of battery-mode parameters has not been acquired (306 NO), then the process 300 returns to act 302, and the controller 212 resumes monitoring the battery-mode parameters. Otherwise, if the controller 212 determines that the minimum amount of battery-mode parameters has been acquired (306 YES), then the process 300 continues to act 308.

At act 308, the controller 212 determines whether an adaptive mode is enabled. A user may select if the adaptive mode is enabled or disabled. If the adaptive mode is enabled, the controller 212 may automatically set a minimum- and maximum-SOC limit. If the adaptive mode is not enabled, the controller 212 may provide a suggested minimum- and maximum-SOC limit to a user. The user may accept, reject, or adjust the suggested minimum- and maximum-SOC limit in various examples. Accordingly, if the controller 212 determines that the controller 212 is not in the adaptive mode of operation (308 NO), then the process 300 continues to act 310.

At act 310, the controller 212 determines a minimum-SOC limit and a maximum-SOC limit based on the SOC information determined at act 304 and outputs the minimum- and maximum-SOC limits to a user for approval, rejection, or adjustment. The minimum-SOC limit may represent an SOC threshold below which the energy-storage device 104 will be recharged. The maximum-SOC limit may represent an SOC threshold to which the energy-storage device 104 will be recharged. The controller 212 may use the SOC information determined at act 304 to select the minimum- and maximum-SOC limit such that an average of the two is 50% SOC. The controller 212 may access a lookup table (for example, stored in the memory and/or storage 218) using the SOC information to identify a minimum- and maximum-SOC limit.

For example, if the SOC determined at act 304 is 20% (that is, if the controller 212 determined that the average maximum SOC consumed is 20% during the window), then the controller 212 may access a lookup table indicating that the minimum-SOC limit may be set to 40% and the maximum-SOC limit may be set to 60%. These values are selected because an average of the two is 50%, and a difference between the two is based on (for example, approximately equal to) the average maximum SOC consumed. In some examples, the difference may be based on the average maximum SOC consumed, but with a small buffer. For example, the minimum-SOC limit may be set slightly higher than 40% to impose a small buffer to account for the possibility of a subsequent SOC consumption being greater than the average maximum SOC. Similar principles may apply to the maximum-SOC limit.

A target SOC average may be 50% in some examples, but in other examples, the target SOC average may be a different value. Act 310 may include accessing the memory and/or storage 218 to retrieve a stored target SOC, which may be set by a user and/or automatically determined by the controller 212 and/or cloud server 108 in various examples. For example, the controller 212 and/or cloud server 108 may learn over time which SOC value maximizes a lifetime of a battery and use the identified SOC value as the target SOC value.

Upon determining the minimum- and maximum-SOC limits, the controller 212 may request approval of the suggested limits from the user. For example, the controller 212 may control a display of the communication interface 220 to display the limits or may communicate with a user device (for example, a smartphone or computer) of the external systems 222 to display the limits to the user. The user may accept, reject, or adjust the suggested limits. For example, the user may accept both the minimum- and maximum-SOC limits or may accept the minimum-SOC limit but adjust the maximum-SOC limit, or may reject both limits, and so forth. If the user accepts or adjusts the limits, the controller 212 may implement the accepted or adjusted limits and the process 300 may return to act 302. If the user rejects the limits, the controller 212 may return to act 302 without implementing the suggested minimum- and maximum-SOC limits.

Returning to act 308, if the controller 212 determines that the adaptive mode is enabled (308 YES), then the process 300 continues to act 312.

At act 312, the controller 212 determines whether a cloud mode is enabled. A user may select if the cloud mode is enabled or disabled. In the cloud mode, the controller 212 may communicate with the cloud server 108 to obtain additional information. For example, the additional information may include an average maximum energy consumption of similarly situated devices. Such similarly situated devices may include, for example, other UPSs implemented in the same facility or geographical region as the UPS 102. The additional information may alternately or additionally include information about local power conditions, such as information indicative of utility blackouts. If the controller 212 determines that the cloud mode is not enabled (312 NO), then the process 300 continues to act 314.

At act 314, the controller 212 determines a minimum-SOC limit and a maximum-SOC limit based on the SOC information determined at act 304, and automatically implements the minimum- and maximum-SOC limits. Act 314 is substantially similar to act 310 and includes determining the minimum- and maximum-SOC limits in a substantially identical manner as discussed above with respect to act 310. However, rather than awaiting user approval to implement the limits, the controller 212 may automatically implement the minimum- and maximum-SOC limits. The process 300 then returns to act 302.

Returning to act 312, if the controller determines that the cloud mode is enabled (312 YES), then the process 300 continues to act 316.

At act 316, the controller 212 determines cloud energy-consumption information. Determining the cloud energy-consumption information may include requesting and/or receiving information from the cloud server 108. The information may be indicative of a maximum energy consumption from a battery in a UPS or other power device near the UPS 102. For example, the information may be indicative of a greatest energy consumption from a battery in a UPS that is implemented in the same facility as the UPS 102, such as the same data center. As discussed above, the controller 212 may send its own energy-consumption information, including information indicative of the battery mode of operation and/or the SOC information, to the cloud server 108.

Suppose, for example, that the UPS 102 is implemented in a data center with two other UPSs, including a first UPS and a second UPS. In a rolling window of time, the cloud server 108 may determine that the average maximum energy consumption of the first UPS is 4 Ah, and the average maximum energy consumption of the second UPS is 7 Ah. The cloud server 108 may therefore determine that the highest average maximum energy consumption is 7 Ah and may send cloud energy-consumption information indicative of the 7 Ah energy consumption to the UPS 102.

At act 318, the controller 212 determines a minimum-SOC limit and a maximum-SOC limit based on local information determined at acts 302 and/or 304 and based on the cloud energy-consumption information determined at act 316. The controller 212 may determine a highest average energy consumption between the local energy consumption (that is, the energy consumption by the UPS 102 from the energy-storage device 108) and the cloud energy-consumption information (that is, the energy-consumption information provided by the cloud server 108 at act 316). In some examples, the controller 212 may identify the larger of the local and cloud energy-consumption information and use the larger value to determine the minimum- and maximum-SOC limits. For example, using the SOC information determined at acts 310 and 316, the controller 212 may access a lookup table (for example, stored in the storage and/or memory 218) correlating the SOC information to minimum- and maximum-SOC limits.

Continuing with the foregoing examples, suppose the highest average energy consumption of the UPS 102 is 5.5 Ah, and the highest average maximum energy consumption indicated by the cloud server 108 is 7 Ah. The controller 212 may identify the 7 Ah energy consumption as the larger value and determine an SOC consumption corresponding to 7 Ah. For example, the controller 212 may determine that 7 Ah corresponds to approximately 26% SOC of the energy-storage device 104. The controller 212 may thus select a minimum-SOC limit of 37% and a maximum-SOC limit of 63% (which may, in some examples, be determined from a lookup table). The process 300 then returns to act 302.

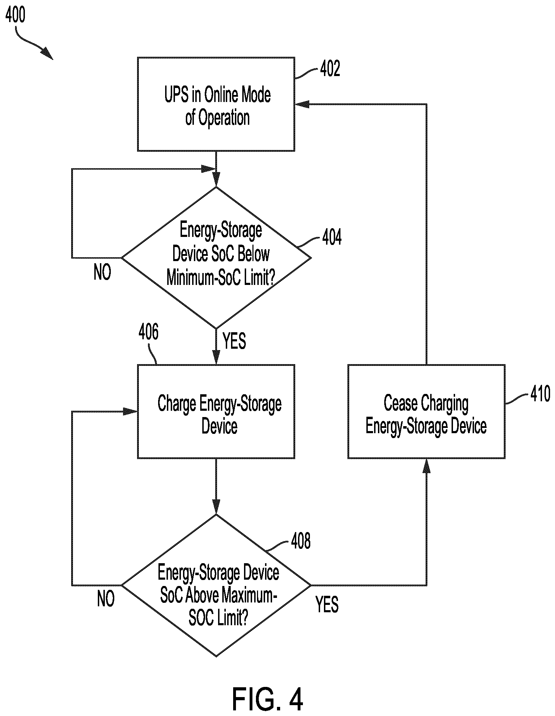

FIG. 4 illustrates a process 400 of operating the UPS 102 to determine when to recharge the energy-storage device 104. The process 400 may be executed by the controller 212 after a minimum- and maximum-SOC limit have been implemented at any of acts 310, 314, and/or 318, and during an online mode of operation.

At act 402, the controller 212 operates the UPS 102 in the online mode of operation. As discussed above, in the online mode of operation the controller 212 controls the AC/DC converter 204 and the DC/AC inverter 214 to provide output power at the output 216 derived from input power at the input 202. The controller 212 may also operate the DC/DC converter 208 to provide recharging power to the energy-storage device 104, as discussed below.

At act 404, the controller 212 determines whether the current SOC of the energy-storage device 104 is at or below the minimum-SOC limit. For example, if the minimum-SOC limit is 40%, the controller 212 may determine if the current SOC of the energy-storage device 104 is at or below 40%. In some examples, the controller 212 may determine the current SOC of the energy-storage device 104 by communicating with a battery-management system coupled to, or included within, the energy-storage device 104. In various examples, the controller 212 may directly determine the current SOC of the energy-storage device by sensing a current and/or voltage of the energy-storage device with the sensors 224. As discussed above, in some examples, the energy-storage device 104 is a component of, and/or internal to, the UPS 102. In other examples, the energy-storage device 104 is separate from, and/or external to, the UPS 102.

If the controller 212 determines that the current SOC of the energy-storage device 104 is not at or below the minimum-SOC limit (404 NO), then the process 400 returns to act 404. Act 404 may be repeatedly executed. If the controller 212 determines that the current SOC of the energy-storage device 104 is at or below the minimum-SOC limit (404 NO), then the process 400 continues to act 406.

At act 406, the controller 212 controls the UPS 102 to begin charging the energy-storage device 104. For example, the controller 212 may control the DC/DC converter 208 to draw input power from the input 202 and provide recharging power to the energy-storage device 104 via the energy-storage-device interface 210. As discussed above, in some examples the energy-storage-device interface 210 may be an internal connection where, for example, the energy-storage device 104 is internal to the UPS 102.

At act 408, the controller 212 determines whether the current SOC of the energy-storage device 104 is at or above the maximum-SOC limit. For example, if the maximum-SOC limit is 60%, the controller 212 may determine whether the current SOC of the energy-storage device 104 is 60% or above. If the current SOC of the energy-storage device 104 is not at or above the maximum-SOC limit (408 NO), then the process 400 returns to act 406, and the controller 212 continues to charge the energy-storage device 104. Otherwise, if the current SOC of the energy-storage device 104 is at or above the maximum-SOC limit (408 YES), then the process 400 continues to act 410.

At act 410, the controller 212 controls the UPS 102 to cease charging the energy-storage device 104. For example, the controller 212 may control the DC/DC converter 208 to stop drawing input power from the input 202. The process 400 then returns to act 402.

As discussed above, the minimum-SOC value and the maximum-SOC value may be selected such that an average of the two values is based on (for example, approximately equal to) a target SOC value, such as 50%. In some examples, a lower restriction may be imposed on the minimum-SOC value. For example, a lower restriction may be imposed on the minimum-SOC value that is based on (for example, approximately equal to) the maximum SOC previously consumed (that is, the difference between the minimum-SOC value and the maximum-SOC value). The lower restriction may be imposed in examples in which the maximum SOC previously consumed is equal to or greater than 33.3% SOC because, for lower values, the minimum-SOC limit selected to maintain a target SOC average of 50% may always be greater than the maximum SOC previously consumed.

If the maximum SOC previously consumed is 40%, for example, then the minimum-SOC limit may be restricted to 40% rather than 30% even if the target SOC value is 50%. In some examples, the maximum-SOC limit may be set to 80% such that a difference between the minimum-SOC limit and the maximum-SOC limit is equal to 40%. In other examples, the maximum-SOC limit may be set to 60% such that an average of the minimum-SOC limit and the maximum-SOC limit is 50%.

In some examples, acts of the processes 300 and/or 400 may be executed in a different order and/or manner. For example, as discussed above with respect to act 304, the controller 212 may determine SOC information based on the battery-mode parameters. In some examples, the controller 212 may determine the SOC information prior to determining a mode of operation (for example, a manual mode of operation, an adaptive mode of operation, or a cloud mode of operation). In other examples, the controller 212 may determine the SOC information only after determining a mode of operation. For example, responsive to determining that the mode of operation is the manual mode of operation (308 NO), the controller 212 may determine the SOC information. In another example, responsive to determining that the mode of operation is the adaptive mode of operation (312 NO), the controller 212 may determine the SOC information. In another example, responsive to determining that the mode of operation is the cloud mode of operation (312 YES), the controller 212 may determine the SOC information.

Various controllers, such as the controller 212, may execute various operations discussed above. Using data stored in associated memory and/or storage, the controller 212 also executes one or more instructions stored on one or more non-transitory computer-readable media, which the controller 212 may include and/or be coupled to, that may result in manipulated data. In some examples, the controller 212 may include one or more processors or other types of controllers. In one example, the controller 212 is or includes at least one processor. In another example, the controller 212 performs at least a portion of the operations discussed above using an application-specific integrated circuit tailored to perform particular operations in addition to, or in lieu of, a general-purpose processor. As illustrated by these examples, examples in accordance with the present disclosure may perform the operations described herein using many specific combinations of hardware and software and the disclosure is not limited to any particular combination of hardware and software components. Examples of the disclosure may include a computer-program product configured to execute methods, processes, and/or operations discussed above. The computer-program product may be, or include, one or more controllers and/or processors configured to execute instructions to perform methods, processes, and/or operations discussed above.

Further examples are provided in the following clauses.
Clause 1. A system comprising:
   a first input configured to be coupled to a primary power source;
   a second input configured to be coupled to at least one energy-storage device;
   an output configured to be coupled to at least one load;
   energy-storage-device-charging circuitry; and
      at least one controller configured to
   determine one or more battery-mode parameters associated with power provided by the at least one energy-storage device,
   select a minimum state-of-charge (SOC) and a maximum SOC based on the one or more battery-mode parameters, and
   control the energy-storage-device-charging circuitry to
   begin charging the at least one energy-storage device responsive to determining that a current SOC of the at least one energy-storage device is at or below the minimum SOC, and
   cease charging the at least one energy-storage device responsive to determining that the current SOC of the at least one energy-storage device is at or above the maximum SOC.
Clause 2. The system of clause 1, wherein an average of the minimum SOC and the maximum SOC is equal to 50%.
Clause 3. The system of clause 1, wherein the minimum SOC is above 0%.
Clause 4. The system of clause 1, wherein the maximum SOC is below 100%.
Clause 5. The system of clause 1, wherein the one or more battery-mode parameters include a highest SOC of the at least one energy-storage device consumed by a single discharge event.
Clause 6. The system of clause 5, wherein the at least one controller is configured to select the minimum SOC and the maximum SOC such that a difference between the maximum SOC and the minimum SOC is based on the highest SOC of the at least one energy-storage device consumed by the single discharge event.
Clause 7. The system of clause 1, wherein the one or more battery-mode parameters include an average SOC of the at least one energy-storage device consumed by discharge events over a period of time.
Clause 8. The system of clause 7, wherein the at least one controller is configured to select the minimum SOC and the maximum SOC such that a difference between the maximum SOC and the minimum SOC is based on the average SOC of the at least one energy-storage device consumed by discharge events over the period of time.
Clause 9. A method of operating a power device including energy-storage-device-charging circuitry configured to be coupled to at least one energy-storage device, the method comprising:
   determining one or more battery-mode parameters associated with power provided by the at least one energy-storage device;
   selecting a minimum state-of-charge (SOC) and a maximum SOC based on the one or more battery-mode parameters; and
   controlling the energy-storage-device-charging circuitry to
   begin charging the at least one energy-storage device responsive to determining that a current SOC of the at least one energy-storage device is at or below the minimum SOC, and
   cease charging the at least one energy-storage device responsive to determining that the current SOC of the at least one energy-storage device is at or above the maximum SOC.
Clause 10. The method of clause 9, wherein an average of the minimum SOC and the maximum SOC is equal to 50%.
Clause 11. The method of clause 9, wherein the minimum SOC is above 0%.
Clause 12. The method of clause 9, wherein the maximum SOC is below 100%.
Clause 13. The method of clause 9, wherein the one or more battery-mode parameters include a highest SOC of the at least one energy-storage device consumed by a single discharge event.
Clause 14. The method of clause 13, wherein selecting the minimum SOC and the maximum SOC includes selecting the minimum SOC and the maximum SOC such that a difference between the maximum SOC and the minimum SOC is based on the highest SOC of the at least one energy-storage device consumed by the single discharge event.
Clause 15. The method of clause 9, wherein the one or more battery-mode parameters include an average SOC of the at least one energy-storage device consumed by discharge events over a period of time.
Clause 16. The method of clause 15, wherein selecting the minimum SOC and the maximum SOC includes selecting the minimum SOC and the maximum SOC such that a difference between the maximum SOC and the minimum SOC is based on the average SOC of the at least one energy-storage device consumed by discharge events over the period of time.
Clause 17. A non-transitory computer-readable medium storing thereon sequences of computer-executable instructions for operating a power device having energy-storage-device-charging circuitry configured to be coupled to at least one energy-storage device, the sequences of computer-executable instructions including instructions that instruct at least one processor to:
   determine one or more battery-mode parameters associated with power provided by the at least one energy-storage device;
   select a minimum state-of-charge (SOC) and a maximum SOC based on the one or more battery-mode parameters; and
   control the energy-storage-device-charging circuitry to
   begin charging the at least one energy-storage device responsive to determining that a current SOC of the at least one energy-storage device is at or below the minimum SOC, and
   cease charging the at least one energy-storage device responsive to determining that the current SOC of the at least one energy-storage device is at or above the maximum SOC.
Clause 18. The non-transitory computer-readable medium of clause 17, wherein an average of the minimum SOC and the maximum SOC is equal to 50%.
Clause 19. The non-transitory computer-readable medium of clause 17, wherein the one or more battery-mode parameters include a highest SOC of the at least one energy-storage device consumed by a single discharge event.
Clause 20. The non-transitory computer-readable medium of clause 18, wherein the at least one processor is configured to select the minimum SOC and the maximum SOC such that a difference between the maximum SOC and the minimum SOC is based on the highest SOC of the at least one energy-storage device consumed by the single discharge event.
Clause 21. The non-transitory computer-readable medium of clause 17, wherein the one or more battery-mode parameters include an average SOC of the at least one energy-storage device consumed by discharge events over a period of time.
Clause 22. The non-transitory computer-readable medium of clause 21, wherein the at least one processor is configured to select the minimum SOC and the maximum SOC such that a difference between the maximum SOC and the minimum SOC is based on the average SOC of the at least one energy-storage device consumed by discharge events over the period of time.

Having thus described several aspects of at least one embodiment, it is to be appreciated various alterations, modifications, and improvements will readily occur to those skilled in the art. Such alterations, modifications, and improvements are intended to be part of, and within the spirit and scope of, this disclosure. Accordingly, the foregoing description and drawings are by way of example only.

## Claims

1. A system comprising:
a first input configured to be coupled to a primary power source;
a second input configured to be coupled to at least one energy-storage device;
an output configured to be coupled to at least one load;
energy-storage-device-charging circuitry; and
at least one controller configured to
determine one or more battery-mode parameters associated with power provided by the at least one energy-storage device,
select a minimum state-of-charge (SOC) and a maximum SOC based on the one or more battery-mode parameters, and
control the energy-storage-device-charging circuitry to
begin charging the at least one energy-storage device responsive to determining that a current SOC of the at least one energy-storage device is at or below the minimum SOC, and
cease charging the at least one energy-storage device responsive to determining that the current SOC of the at least one energy-storage device is at or above the maximum SOC.

2. The system of claim 1, wherein the one or more battery-mode parameters include a highest SOC of the at least one energy-storage device consumed by a single discharge event.

3. The system of claim 2, wherein the at least one controller is configured to select the minimum SOC and the maximum SOC such that a difference between the maximum SOC and the minimum SOC is based on the highest SOC of the at least one energy-storage device consumed by the single discharge event.

4. The system of any of the above claims, wherein the one or more battery-mode parameters include an average SOC of the at least one energy-storage device consumed by discharge events over a period of time.

5. The system of claim 4, wherein the at least one controller is configured to select the minimum SOC and the maximum SOC such that a difference between the maximum SOC and the minimum SOC is based on the average SOC of the at least one energy-storage device consumed by discharge events over the period of time.

6. A method of operating a power device including energy-storage-device-charging circuitry configured to be coupled to at least one energy-storage device, the method comprising:
determining one or more battery-mode parameters associated with power provided by the at least one energy-storage device;
selecting a minimum state-of-charge (SOC) and a maximum SOC based on the one or more battery-mode parameters; and
controlling the energy-storage-device-charging circuitry to
begin charging the at least one energy-storage device responsive to determining that a current SOC of the at least one energy-storage device is at or below the minimum SOC, and
cease charging the at least one energy-storage device responsive to determining that the current SOC of the at least one energy-storage device is at or above the maximum SOC.

7. The method of claim 6, wherein the one or more battery-mode parameters include a highest SOC of the at least one energy-storage device consumed by a single discharge event.

8. The method of claim 7, wherein selecting the minimum SOC and the maximum SOC includes selecting the minimum SOC and the maximum SOC such that a difference between the maximum SOC and the minimum SOC is based on the highest SOC of the at least one energy-storage device consumed by the single discharge event.

9. The method of any of the claims 6 to 8, wherein the one or more battery-mode parameters include an average SOC of the at least one energy-storage device consumed by discharge events over a period of time.

10. The method of claim 9, wherein selecting the minimum SOC and the maximum SOC includes selecting the minimum SOC and the maximum SOC such that a difference between the maximum SOC and the minimum SOC is based on the average SOC of the at least one energy-storage device consumed by discharge events over the period of time.

11. A non-transitory computer-readable medium storing thereon sequences of computer-executable instructions for operating a power device having energy-storage-device-charging circuitry configured to be coupled to at least one energy-storage device, the sequences of computer-executable instructions including instructions that instruct at least one processor to:
determine one or more battery-mode parameters associated with power provided by the at least one energy-storage device;
select a minimum state-of-charge (SOC) and a maximum SOC based on the one or more battery-mode parameters; and
control the energy-storage-device-charging circuitry to
begin charging the at least one energy-storage device responsive to determining that a current SOC of the at least one energy-storage device is at or below the minimum SOC, and
cease charging the at least one energy-storage device responsive to determining that the current SOC of the at least one energy-storage device is at or above the maximum SOC.

12. The non-transitory computer-readable medium of claim 11, wherein the one or more battery-mode parameters include a highest SOC of the at least one energy-storage device consumed by a single discharge event.

13. The non-transitory computer-readable medium of claims 11 or 12, wherein the at least one processor is configured to select the minimum SOC and the maximum SOC such that a difference between the maximum SOC and the minimum SOC is based on the highest SOC of the at least one energy-storage device consumed by the single discharge event.

14. The non-transitory computer-readable medium of any of the claims 11 to 13, wherein the one or more battery-mode parameters include an average SOC of the at least one energy-storage device consumed by discharge events over a period of time.

15. The non-transitory computer-readable medium of claim 14, wherein the at least one processor is configured to select the minimum SOC and the maximum SOC such that a difference between the maximum SOC and the minimum SOC is based on the average SOC of the at least one energy-storage device consumed by discharge events over the period of time.
